# DEMANDE DE BREVET EUROPEEN

(11) **EP 1 669 846 A1**
(43) Date de publication de la demande: **14.06.2006**
(21) Numéro de dépôt: 05291868.7
(22) Date de dépôt: 08.09.2005
(51) Int. Cl.: G06F 3/033, G06N 5/04

(54) **Agent rationnel dialoguant, système de dialogue intelligent l'utilisant, procédé de pilotage d'un dialogue intelligent, et programme pour sa mise en oeuvre**

(30) Priorité: 27.09.2004 FR 0410210
(71) Demandeur: France Télécom, 75015 Paris (FR)
(72) Inventeur: Louis, Vincent, 22300 Ploubezre (FR); Panaget, Franck, 22560 Trebeurden (FR); Bretier, Philippe, 22660 Trelevern (FR)
(74) Mandataire: Bentz, Jean-Paul

(57) **Abrégé**

L'invention concerne notamment un agent rationnel incluant des moyens d'interprétation transformant en actes formels entrants des évènements traduisant une activité de communication d'un agent externe, une unité rationnelle élaborant des actes formels sortants en fonction des actes formels entrants et d'un modèle comportemental de l'agent rationnel, et des moyens de génération d'évènements sortants transformant les actes formels sortants en événements sortants matérialisant une activité de communication de l'agent rationnel vis-à-vis de l'agent externe.

Selon l'invention, les moyens d'interprétation comprennent plusieurs modules d'interprétation dont chacun est dédié à une modalité qui lui est propre, et l'agent rationnel comprend également une couche de gestion des entrées et sorties dotée d'un module de fusion multimodale qui prend en charge tous les événements entrants, sous-traite leur interprétation aux différents modules d'interprétation concernés, opère une corrélation des actes formels entrants, et soumet à l'unité rationnelle les actes communicatifs formels entrants ainsi corrélés.

## Description

L'invention concerne, de façon générale, l'automatisation de processus de communication.

Plus précisément, l'invention concerne, selon un premier de ses aspects, un agent rationnel dialoguant comprenant une architecture logicielle incluant au moins des moyens d'interprétation d'évènements entrants, une unité rationnelle, et des moyens de génération d'évènements sortants, les moyens d'interprétation étant conçus pour, en fonctionnement, transformer en actes communicatifs formels entrants des événements entrants traduisant une activité de communication d'un agent externe, l'unité rationnelle élaborant, en fonctionnement, des actes communicatifs formels sortants en fonction des actes communicatifs formels entrants et d'un modèle comportemental de l'agent rationnel géré par l'unité rationnelle, et les moyens de génération transformant, en fonctionnement, les actes communicatifs formels sortants en événements sortants matérialisant une activité de communication de l'agent rationnel vis-à-vis de l'agent externe.

Un agent rationnel de ce type est bien connu de l'homme du métier par le brevet de base FR 2 787 902, du même déposant.

La technique proposée dans ce brevet de base concerne les systèmes de dialogue intelligents mis en oeuvre dans une langue naturelle par des agents rationnels, que ce soit dans un contexte d'interaction entre un système de dialogue intelligent et un utilisateur ou dans un contexte d'interaction entre un système de dialogue intelligent et un autre agent logiciel d'un système de dialogue intelligent à plusieurs agents.

Dans le premier cas, le dialogue est conduit dans une langue naturelle, alors qu'il peut, dans le second cas, être directement conduit dans un langage logique formel tel que le langage connu sous l'acronyme "ArCoL" issu du brevet de base précité, ou le langage connu sous l'acronyme "FIPA-ACL", développé par le consortium FIPA (acronyme de l'anglais "Foundation for Intelligent Physical Agents", les informations relatives à ce consortium étant accessibles sur le site Internet "http://www.fipa.org").

En revanche, le brevet de base précité ne définit aucun moyen spécifique pour conduire un dialogue dans lequel l'agent externe au moins s'exprime suivant des modalités multiples, par exemple à la fois dans sa langue naturelle et en pressant des boutons et / ou en adoptant une gestuelle particulière.

Des tentatives de formalisation de dialogues multimodaux ont cependant été entreprises en vue de permettre un dialogue entre un agent rationnel automatisé et un agent externe, par exemple un utilisateur humain, s'exprimant suivant des modalités non verbales (c'est-à-dire qui ne font pas appel à la langue naturelle, comme par exemple à travers des interfaces gestuelles ou haptiques), ou suivant plusieurs modalités utilisées simultanément et/ou successivement, chaque modalité de communication étant liée à un canal d'information particulier comme c'est le cas pour un message écrit, un message oral, une intonation, un dessin, une gestuelle, des informations tactiles, etc.

Un utilisateur pourrait ainsi s'exprimer simultanément par la voix et le geste au moyen d'une interface appropriée, étant entendu que l'agent rationnel pourrait lui aussi s'exprimer suivant plusieurs modalités différentes pour répondre à l'utilisateur.

De telles interactions multimodales requièrent la mise en oeuvre de deux opérations, à savoir la fusion multimodale et la fission multimodale.

La fusion multimodale est l'opération par laquelle un ou plusieurs composants d'interprétation d'événements multimodaux en entrée du système de dialogue intelligent produisent une représentation unifiée de la sémantique des messages perçus.

La fission multimodale, qui n'est requise que si l'agent rationnel doit s'exprimer suivant plusieurs modalités différentes indépendamment de la façon dont s'exprime l'agent externe, est l'opération duale de la fusion multimodale et consiste, pour un ou plusieurs composants de génération d'événements multimodaux, à générer lesdits événements pour exprimer la représentation sémantique du message produit par l'unité rationnelle de l'agent rationnel.

Parmi les tentatives de formalisation de dialogues multimodaux, on peut citer celle du groupe MMI de l'organisme de normalisation W3C qui a proposé, à défaut d'une architecture fonctionnelle, un outil de représentation des entrées et sorties multimodales d'un système d'interaction fondé sur un langage à balises dénommé EMMA (acronyme de l'anglais : Extensible MultiModal Annotation Markup Language) et apparenté au langage XML, l'outil existant ne permettant cependant de représenter que les entrées.

On peut également citer celle du groupe VoiceXML de l'organisme W3C en lien avec le groupe MMI, et celle du consortium MPEG, qui est à l'origine du projet MPEG-7 qui fournit un mécanisme pour ajouter des éléments descriptifs à un contenu multimodal, et du projet MPEG-21, dont l'objectif est de proposer un cadre standard pour l'interaction multimodale.

Cependant, bien que de nombreux systèmes mettent en oeuvre des composants de fusion et/ou de fission multimodale, ces composants sont généralement le résultat d'intégrations empiriques de capacités de traitement de plusieurs média, et non le résultat de la mise en oeuvre d'une architecture logicielle prédéfinie.

En particulier, bien que les travaux du groupe MMI proposent un outil de représentation de flux d'entrées et de sorties multimodales, accompagné d'une architecture abstraite d'organisation des composants (voir W3C Multimodal Interaction Framework - W3C NOTE 06 May 2003 - http://www.w3.org/TR/2003/NOTE-mmi-framework-20030506/), ces travaux n'ont conduit aujourd'hui à aucun mécanisme concret pour l'interprétation d'entrées multimodales ni pour la génération de sorties multimodales par l'agent rationnel de dialogue intelligent.

Dans ce contexte, et alors que le brevet de base précité, FR 2 787 902, n'envisage que des interactions reposant sur l'utilisation de la langue naturelle entre utilisateur et système de dialogue intelligent (compréhension et génération), ainsi que sur l'utilisation de langages de communication formels de type ArCoL ou FIPA-ACL entre agents logiciels (l'un d'eux pouvant être un système de dialogue intelligent), la présente invention a principalement pour but de proposer une architecture logicielle qui permette à l'agent rationnel dialoguant de gérer de façon générique des interactions multimodales avec ses interlocuteurs, qu'il s'agisse d'utilisateurs humains ou d'autres agents logiciels.

A cette fin, l'agent rationnel dialoguant de l'invention, par ailleurs conforme à la définition générique qu'en donne le préambule ci-dessus, est essentiellement caractérisé en ce que l'architecture logicielle comprend en outre une couche de gestion des entrées et sorties dotée au moins d'un module de fusion multimodale, en ce que les moyens d'interprétation comprennent une pluralité de modules d'interprétation d'événements entrants dont chacun est spécifiquement dédié à une modalité de communication qui lui est propre, en ce que tous les événements entrants, en fonctionnement, sont pris en charge par le module de fusion multimodale, qui sous-traite aux différents modules d'interprétation l'interprétation de ces événements entrants en fonction de leurs modalités respectives, et en ce que le module de fusion multimodale opère une corrélation des actes communicatifs formels entrants recueillis de ces modules d'interprétation au cours d'une même phase de fusion, et soumet à l'unité rationnelle, à la fin de la phase de fusion, les actes communicatifs formels entrants ainsi corrélés.

De préférence, le module de fusion sous-traite l'interprétation des évènements entrants en transmettant au module d'interprétation concerné tout événement entrant exprimé dans la modalité propre à ce module d'interprétation, une liste d'objets éventuellement déjà évoqués dans les évènements entrants antérieurs de la même phase de fusion, et une liste d'actes communicatifs formels retournée par l'appel du précédent module d'interprétation au cours de la même phase de fusion.

Pour ce faire, chaque module d'interprétation appelé par le module de fusion retourne par exemple une liste d'objets complétée et mise à jour pour inclure tout nouvel objet évoqué ou modifier tout objet évoqué dans le dernier événement entrant et une liste d'actes communicatifs formels traduisant l'activité de communication représentée par l'ensemble des évènements entrants reçus depuis le début de la même phase de fusion.

Le module de fusion comprend avantageusement une pile de gestion de la phase de fusion accessible en lecture et en écriture pour tous les modules d'interprétation et pour le module de fusion.

De façon symétrique, l'invention concerne également un agent rationnel dialoguant comprenant une architecture logicielle incluant au moins des moyens d'interprétation d'évènements entrants, une unité rationnelle, et des moyens de génération d'évènements sortants, les moyens d'interprétation étant conçus pour, en fonctionnement, transformer en actes communicatifs formels entrants des événements entrants traduisant une activité de communication d'un agent externe, l'unité rationnelle élaborant, en fonctionnement, des actes communicatifs formels sortants en fonction des actes communicatifs formels entrants et d'un modèle comportemental de l'agent rationnel géré par l'unité rationnelle, et les moyens de génération transformant, en fonctionnement, les actes communicatifs formels sortants en événements sortants matérialisant une activité de communication de l'agent rationnel vis-à-vis de l'agent externe, cet agent étant caractérisé en ce que la couche de gestion des entrées et sorties est dotée d'un module de fission multimodale, en ce que les moyens de génération comprennent une pluralité de modules de génération d'événements sortants dont chacun est spécifiquement dédié à une modalité de communication qui lui est propre, en ce que le module de fission multimodale sous-traite aux différents modules de génération la transformation des actes communicatifs formels sortants élaborés par l'unité rationnelle en événements sortants de modalités respectives, et en ce que le module de fission multimodale gère le flux de ces événements sortants.

Par exemple, le module de fission sous-traite la transformation des actes formels sortants en évènements sortants en adressant séquentiellement aux différents modules de génération les actes communicatifs formels sortants élaborés par l'unité rationnelle et une structure arborescente à compléter, organisée en branches dont chacune est destinée à représenter un des évènements sortants, chaque module de génération retournant alors la structure arborescente au module de fission après l'avoir complétée du ou des évènements sortants exprimés dans la modalité propre à ce module de génération.

De préférence, la structure arborescente est une structure à balises, et chacun des modules de génération utilise une balise commune à tous les modules de génération pour identifier un même objet évoqué dans un événement sortant.

Il est par ailleurs utile de prévoir que l'un au moins des modules de génération soit conçu pour appeler sélectivement, en vue d'un nouveau traitement, un module de génération précédemment appelé par le module de fission pour lui transmettre une nouvelle structure partielle contenant l'événement sortant élaboré par le module de génération appelant et ne contenant plus l'événement sortant antérieurement élaboré par le module de génération appelé.

Dans le cas où l'agent rationnel comprend à la fois des modules de fusion et des modules de fission multimodales, les modules d'interprétation et de génération multimodales relatifs à une même modalité appartiennent de préférence à un même module de traitement de cette modalité.

L'invention concerne également un système de dialogue intelligent comprenant au moins un agent rationnel dialoguant tel que précédemment défini, associé à une interface de communication multimodale.

L'invention concerne encore un procédé de pilotage d'un dialogue intelligent entre un agent rationnel piloté et un agent externe, ce procédé comprenant au moins des opérations d'interprétation consistant à interpréter des évènements entrants fournis à l'agent rationnel piloté en les transformant en actes communicatifs formels entrants, des opérations de détermination consistant à élaborer, sous forme d'actes communicatifs formels sortants, des réponses appropriées aux actes communicatifs formels entrants, et des opérations d'expression consistant à produire, par transformation des actes communicatifs formels sortants, des événements sortants à destination de l'agent externe, ce procédé étant caractérisé en ce qu'il comprend en outre des opérations d'aiguillage, des opérations de corrélation et des opérations de gestion de phase, en ce qu'au moins une opération d'aiguillage consiste à prendre en compte au moins un événement entrant en fonction d'une modalité d'expression de cet événement entrant, en ce que les opérations d'interprétation des évènements entrants exprimés dans des modalités respectives différentes sont mises en oeuvre séparément, en ce qu'au moins une opération de corrélation consiste à recueillir ensemble, au cours d'une même phase de fusion, des actes communicatifs formels entrants correspondant à des évènements entrants de modalités différentes, en vue du traitement conjoint de ces actes communicatifs formels entrants par une même opération de détermination, et en ce que les opérations de gestion de phase consistent au moins à déterminer au moins une phase de fusion.

Par exemple, les opérations de gestion de phase comprennent au moins une opération de mise à jour d'une pile ou liste d'objets pour la gestion de la clôture de la phase de fusion consistant à stocker sélectivement dans la pile, lors d'une opération d'interprétation, un ou plusieurs nouveaux objets indiquant l'apparition prévue d'un ou plusieurs nouveaux événements avant la fin de la phase de fusion, et à retirer sélectivement de la pile, lors d'une opération d'interprétation, un ou plusieurs objets dans le cas où les évènements attendus correspondants ne sont plus à attendre avant la fin de la phase de fusion.

Les opérations de gestion de phase peuvent par ailleurs comprendre en outre une opération de consultation de la pile, consistant à consulter sélectivement tous les objets de la pile lors d'une opération d'interprétation.

Les opérations de gestion de phase peuvent encore comprendre une opération de chronométrage consistant à retirer sélectivement de la pile un objet de type délai, à armer un chronomètre pour la durée de ce délai, et à consulter la pile à la fin de l'écoulement de ce délai.

Les opérations de gestion de phase peuvent comprendre une opération de clôture de la phase de fusion, consistant à mettre fin à la phase de fusion, postérieurement aux opérations d'interprétation, lorsque la pile est vide.

L'invention concerne également un procédé de pilotage d'un dialogue intelligent entre un agent rationnel piloté et un agent externe, ce procédé comprenant au moins des opérations d'interprétation consistant à interpréter des évènements entrants fournis à l'agent rationnel piloté en les transformant en actes communicatifs formels entrants, des opérations de détermination consistant à élaborer, sous forme d'actes communicatifs formels sortants, des réponses appropriées aux actes communicatifs formels entrants, et des opérations d'expression consistant à produire, par transformation des actes communicatifs formels sortants, des événements sortants à destination de l'agent externe, ce procédé étant caractérisé en ce qu'il comprend en outre une opération d'enchaînement consistant au moins à appliquer aux actes communicatifs formels sortants, de façon séquentielle, des opérations d'expression respectivement associées à des modalités de sortie différentes, et à produire une structure arborescente organisée en branches dont chacune représente un des évènements sortants, chaque opération d'expression complétant cette structure arborescente avec des informations modales propres à cette opération d'expression.

De préférence, l'opération d'enchaînement produit une structure arborescente à balises, et certaines au moins des opérations d'expression associées à des modalités de sortie respectives différentes utilisent une balise commune pour évoquer un même objet invoqué dans un évènement sortant.

Chaque opération d'expression peut en outre être conçue pour faire elle-même appel à une autre opération d'expression déjà appelée au cours d'une même opération d'enchaînement et pour faire modifier, par cette autre opération d'expression, dans la structure arborescente en cours de construction, un évènement sortant déjà préalablement élaboré par cette autre opération d'expression.

L'invention concerne enfin un programme d'ordinateur comportant des instructions de programme propres à mettre en oeuvre le procédé précédemment défini lorsque ce programme est installé sur un équipement informatique auquel il est destiné.

D'autres caractéristiques et avantages de l'invention ressortiront clairement de la description qui en est faite ci-après, à titre indicatif et nullement limitatif, en référence aux dessins annexés, dans lesquels :
- la figure 1 est un schéma représentant l'architecture d'un agent rationnel dialoguant conforme à l'invention;
- la figure 2 est un organigramme représentant l'organisation logique et chronologique des opérations mises en oeuvre lors d'une phase de fusion multimodale; et
- la figure 3 est un organigramme représentant l'organisation logique et chronologique des opérations mises en oeuvre lors d'une phase de fission multimodale.

Comme annoncé précédemment, l'invention se situe dans le domaine des systèmes d'interaction multimodaux, et plus particulièrement dans les composants d'interprétation des événements multimodaux en entrée des systèmes (composants de fusion) et de génération d'événements multimodaux en sortie (composants de fission).

Dans ce cadre, la présente invention propose une architecture logicielle mettant en oeuvre, pour des interactions multimodales, l'architecture formelle décrite dans le brevet de base précédemment cité.

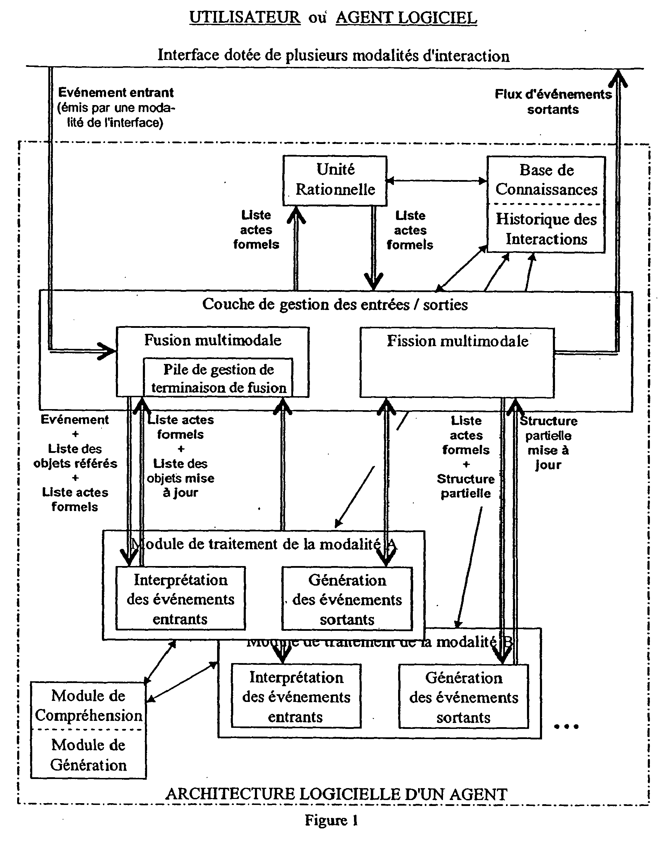

Comme le montre la figure 1, cette architecture comprend:
. une couche de gestion des entrées et sorties qui orchestre, à l'intérieur de l'agent rationnel dialoguant, le traitement des événements entrants et la production d'événements sortants (voir plus bas);
. un certain nombre de modules de traitement dont chacun est lié à une modalité d'interaction qui lui est spécifique et traite les événements exprimés dans cette modalité. Le choix des modules de ce type à mettre en oeuvre dépend directement des différentes modalités de communication offertes par les interfaces utilisateur ou agent logiciel avec lesquelles l'agent rationnel devra interagir;
. une unité rationnelle telle que décrite dans le brevet de base précité, qui a pour rôle de calculer les réactions de l'agent rationnel, par inférence logique avec les axiomes du modèle formel de cet agent.
. une Base de connaissance et un historique des interactions, tels que décrits dans le brevet de base précité, et auxquels ont accès la couche de gestion des entrées / sorties, l'unité rationnelle et les modules de traitement précités; et
. des modules de compréhension et de génération tels que décrits dans le brevet de base précité, qui sont utilisés, au besoin, par les modules de traitement des événements liés à des modalités linguistiques (par exemple, résultats d'une reconnaissance de parole, ou messages saisis au clavier par l'utilisateur).

L'élément central de cette nouvelle architecture est la couche de gestion des entrées / sorties, qui orchestre la réception et l'émission des événements à l'extérieur de l'agent rationnel, ainsi que le traitement de ces événements à l'intérieur de l'agent et leur répartition entre les différents modules.

Ce traitement est orchestré en trois temps ou phases, comprenant une phase de fusion multimodale, une phase de raisonnement, et une phase de fission multimodale.

Lors de la phase de fusion multimodale, tous les événements entrants sont interprétés pour former une liste d'actes communicatifs formels qui représentent formellement les actes de communication accomplis par l'agent externe émetteur de ces évènements, à savoir un utilisateur humain ou un autre agent logiciel. Ces actes sont exprimés dans un langage logique formel tel que celui utilisé dans le brevet de base précité (dénommé ArCoL, pour "Artimis Communication Language"), ou tel que le langage FIPA-ACL, qui est un langage normalisé par le consortium FIPA sur la base du langage ArCoL.

Lors de la phase de raisonnement: les actes communicatifs formels sont transmis à l'unité rationnelle qui calcule une réaction appropriée de l'agent rationnel dialoguant sous la forme d'une nouvelle liste d'actes communicatifs formels, ce calcul étant effectué comme connu de l'homme du métier par le brevet de base précité, c'est-à-dire par inférence logique sur la base des axiomes du modèle comportemental formel de l'agent rationnel.

Enfin, lors de la phase de fission multimodale, les actes communicatifs formels précédemment élaborés par l'unité rationnelle sont transformés en événements pour les différentes modalités disponibles de l'interface multimodale de communication avec l'agent externe (utilisateur ou agent logiciel).

Dans le cas particulier où seules sont envisagées des interactions entre l'agent rationnel et d'autres agents logiciels (qui ne sont donc pas des utilisateurs humains), on implante dans cette architecture logicielle des modules de traitement des événements associés à l'interprétation et la génération de messages exprimés dans un langage formel de communication inter-agent comme FIPA-ACL. Du point de vue de l'agent rationnel qui met en oeuvre le système de dialogue intelligent, l'utilisation d'un tel langage pour communiquer avec d'autres entités est alors vue comme une interaction sur une modalité particulière.

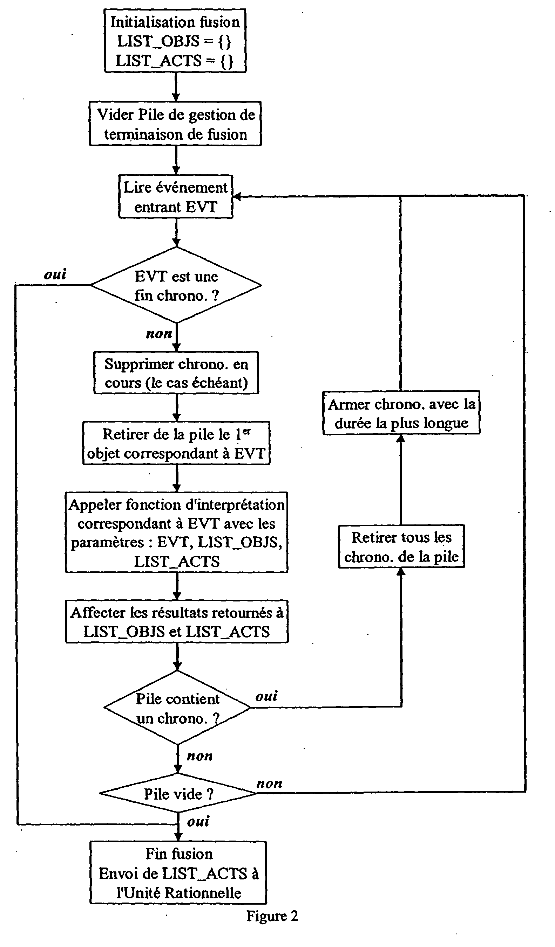

Le mécanisme de fusion multimodale mis en oeuvre par la couche de gestion des entrées / sorties sera plus particulièrement décrit ci-après en référence à la figure 2.

Les événements entrants destinés à l'agent rationnel sont transmis séparément, modalité par modalité, par l'interface multimodale à travers laquelle l'agent rationnel dialogue avec l'agent externe (utilisateur ou autre agent logiciel). Par exemple, si l'utilisateur clique pendant qu'il prononce un phrase, deux sources produisent des événements vers l'agent rationnel, à savoir d'une part la modalité tactile de l'interface utilisateur, qui perçoit les clics, et d'autre part la modalité vocale, qui met en oeuvre la détection et la reconnaissance de parole.

Chaque événement entrant, reçu par la couche de gestion des entrées / sorties, est envoyé au module de traitement associé à la modalité correspondante. Dans l'exemple précédent, l'agent rationnel doit disposer de deux modules de traitement, l'un pour les événements liés à la modalité tactile, et l'autre pour les événements liés à la modalité vocale.

D'une manière générale, chaque module de traitement associé à une modalité est composé de deux fonctions, encore appelées "modules", à savoir une fonction d'interprétation des événements entrants, qui est appelée au cours de la phase de fusion multimodale, et une fonction de génération d'événements sortants, qui est appelée au cours de la phase de fission multimodale, comme décrit plus loin.

Un événement entrant sera donc traité par la fonction d'interprétation du module de traitement qui est associé à la modalité dans laquelle cet événement se produit.

Cette fonction d'interprétation reçoit trois arguments, à savoir :
. l'événement entrant EVT lui-même;
. la liste LIST_OBJS des objets déjà évoqués dans les événements entrants précédents au cours de la même phase de fusion (ces objets ont été identifiés par les fonctions d'interprétation appelées lors de la réception des événements entrants précédents). Cette liste est vide au premier appel de la phase de fusion multimodale en cours; et
. la liste LIST_ACTS des actes communicatifs formels retournée par l'appel à la dernière fonction d'interprétation au cours de la même phase de fusion, cette liste étant vide au premier appel de la phase de fusion multimodale en cours.

A partir de ces éléments, la fonction d'interprétation appelée doit retourner deux résultats, à savoir :
. la précédente liste LIST_OBJS des objets déjà évoqués, complétée et mise à jour, le cas échéant, par les objets qui sont évoqués dans le contenu de l'événement entrant EVT. Pour chaque nouvel objet ajouté à la liste, une représentation interne de cet objet est créée dans l'historique des interactions, qui est partagé par l'ensemble des modules de l'architecture logicielle proposée (ces représentations pourront notamment être utilisées dans les actes communicatifs formels et rendus accessibles à la fois aux modules de traitement associés aux autres modalités et à l'unité rationnelle);
. la liste LIST_ACTS des actes communicatifs formels qui représentent la force communicative, ou illocutoire, de l'ensemble des événements reçus depuis le début de la phase de fusion (incluant l'événement EVT en cours de traitement). Cette liste peut éventuellement être vide, ce qui indique que l'ensemble des événements reçus ne permet pas de donner une interprétation satisfaisante de l'action de l'agent externe sur l'interface de communication. La construction de cette liste reste à l'entière appréciation de la fonction d'interprétation, et, en particulier n'inclut par nécessairement la liste retournée par l'appel à la dernière fonction d'interprétation. Le processus d'interprétation doit construire une liste qui représente l'ensemble des informations transmises jusqu'ici aux différentes fonctions d'interprétation de la phase de fusion en cours. Il est contextuel aux interactions passées et doit pour cela s'appuyer sur les informations stockées dans l'historique des interactions.

La couche de gestion des entrées et sorties doit alors disposer d'un algorithme spécifique (qui pourra dépendre des applications de dialogue mises en oeuvre) pour décider si la phase de fusion en cours est ou non terminée. Cet algorithme doit, en d'autres termes, répondre à la question de savoir s'il faut encore attendre un événement entrant avant de déclencher le calcul de réaction par l'unité rationnelle.

Si cet algorithme indique que d'autres événements entrants doivent arriver, alors la couche de gestion des entrées et sorties attend le prochain événement entrant, et appelle, comme indiqué ci-dessus, la fonction d'interprétation associée à cet événement.

En revanche, si l'algorithme indique qu'il n'y a plus d'événement entrant à attendre, la phase de fusion se termine, et la liste des actes communicatifs formels retournée par l'appel à la dernière fonction d'interprétation est transmise à l'unité rationnelle.

L'algorithme de base proposé dans la présente invention, qui pourra être ajusté en fonction des applications de dialogue mises en oeuvre, est fondé sur la maintenance d'une pile de gestion de l'arrêt de la phase de fusion par le mécanisme de fusion multimodale de la couche de gestion des entrées et sorties. Au début d'une phase de fusion, cette pile est vidée, puis la fonction d'interprétation correspondant au premier événement entrant reçu est appelée. La fusion se termine dès que la pile est vide au retour d'appel d'une fonction d'interprétation.

Cette pile contient en fait une liste d'objets représentant les différents événements attendus avant de finir la phase de fusion. Ces objets peuvent décrire les événements attendus avec plus ou moins de précision. L'objet le plus général désignera n'importe quel événement. Un objet plus spécifique désignera n'importe quel événement destiné à être traité par le module de traitement d'une modalité particulière. Un objet encore plus spécifique désignera un événement particulier parmi les événements destinés à être traité par le module de traitement d'une modalité particulière, etc.

Par exemple, on peut stocker dans la pile un objet désignant n'importe quel événement, un objet désignant tout événement destiné à la modalité tactile, un objet désignant un événement destiné à la modalité tactile de type "clic", un événement destiné à la modalité tactile de type "clic / bouton enfoncé", ... Dans ce cas, un événement destiné à la modalité tactile de type "clic / bouton relâché" correspondra aux trois premiers objets mais pas au quatrième. Un objet particulier "délai" indiquera également qu'un événement est possible dans un délai indiqué. Ce délai permet à l'agent rationnel d'attendre d'éventuels événements supplémentaires à prendre en compte dans la phase de fusion en cours avant la clôture effective de cette phase.

La pile peut être rendue accessible en lecture et écriture à toutes les fonctions d'interprétation de la façon suivante:
. une fonction - ou module - d'interprétation peut stocker un nouvel objet dans la pile pour indiquer qu'il faut attendre un certain événement avant de clore la fusion;
. une fonction - ou module - d'interprétation peut retirer de la pile un ou plusieurs objets pour indiquer que les événements attendus correspondants ne sont plus nécessaires pour terminer la fusion; et
. une fonction - ou module - d'interprétation peut consulter l'ensemble des objets de la pile pour connaître les événements attendus futurs avant la terminaison de la fusion.

Lors de la réception d'un événement EVT entrant, la couche de gestion des entrées / sorties enlève de la pile le premier objet dont la description correspond à cet événement avant d'appeler la fonction d'interprétation adéquate comme indiqué plus haut.

Après exécution de cette fonction :
. si la pile est vide, l'algorithme de clôture indique que la fusion est terminée;
. si la pile contient un objet "délai", la couche de gestion des entrées et sorties retire cet objet de la pile et arme un chronomètre avec le temps indiqué par cet objet, de sorte qu'une fois ce délai écoulé, la couche de gestion des entrées / sorties procède une nouvelle fois au test de la pile pour déterminer si la fusion est terminée ou non. Tout événement entrant reçu après l'armement d'un chronomètre et avant la fin de l'écoulement du délai correspondant annule ce chronomètre;
. sinon, l'algorithme de clôture indique que la fusion n'est pas terminée et qu'il faut attendre un autre événement entrant.

Une fois la phase de fusion terminée, l'unité rationnelle calcule alors la réaction de l'agent rationnel selon les principes connus de l'homme du métier par le brevet de base précité.

### Exemple :

Dans une application de recherche de restaurant, l'agent externe, représenté en l'occurrence par un utilisateur humain, dispose d'une interface tactile et vocale pour interroger le système de dialogue intelligent. Supposons que l'utilisateur prononce la phrase "je cherche un restaurant italien par ici" en même temps qu'il désigne, par exemple par un clic de souris ou par un toucher du doigt, une zone de l'écran symbolisant la Tour Eiffel.

La modalité vocale de l'interface utilisateur commence par envoyer à l'agent rationnel un événement indiquant une détection de parole ("l'utilisateur commence à parler"). La couche de gestion des entrées / sorties appelle alors la fonction d'interprétation de la modalité vocale avec les arguments suivants :
. l'événement entrant EVT "l'utilisateur commence à parler";
. une liste LIST_OBJS d'objets déjà évoqués (pour l'instant vide puisque la phase de fusion débute tout juste); et
. une liste LIST_ACTS d'actes communicatifs formels retournés par le dernier appel à une fonction d'interprétation (pour l'instant vide puisque la phase de fusion débute tout juste).

A ce stade, la fonction d'interprétation de la modalité vocale ne peut associer à cet événement aucune interprétation au niveau sémantique. En revanche, elle sait qu'un événement de type "résultat de reconnaissance de parole" destiné à la modalité vocale arrivera plus tard. Cette fonction stocke donc dans la pile de gestion de clôture de la phase de fusion un objet indiquant d'attendre ce type d'événement, puis renvoie une liste d'objets déjà évoqués et une liste d'actes communicatifs formels vides.

La couche de gestion des entrées / sorties applique son algorithme de clôture de la phase de fusion en examinant le contenu de la pile. Celle-ci contenant un objet de type événement, la fusion n'est pas terminée et se met en attente d'un nouvel événement entrant.

La modalité tactile de l'interface envoie alors à l'agent rationnel un événement entrant signifiant "clic sur la Tour Eiffel". Ce type d'événement ne figurant pas dans la pile de gestion de clôture de la phase de fusion, la couche de gestion des entrées / sorties ne modifie pas la pile et appelle la fonction d'interprétation de la modalité tactile avec les arguments suivants :
- l'événement entrant "clic sur la Tour Eiffel";
- une liste vide d'objets déjà évoqués; et
- la liste vide d'actes communicatifs formels retournée par le dernier appel à la fonction d'interprétation de la modalité vocale.

La fonction d'interprétation de la modalité tactile identifie alors une référence à l'objet "Tour Eiffel", de type localisation, crée cet objet dans la structure adéquate de l'historique des interactions, puis retourne une liste LIST_OBJS d'objets contenant l'unique objet "Tour Eiffel" et une liste LIST_ACTS d'actes communicatifs formels. Cette liste d'actes doit correspondre à l'interprétation du message de l'utilisateur dans le contexte du dialogue en cours, en supposant qu'il n'y a plus d'autre événement entrant à venir. Par exemple, si le dialogue vient de commencer, cette liste peut être réduite à un acte de type dit "QUERY-REF" portant sur un restaurant situé près de l'objet "Tour Eiffel" identifié, ce qui signifie que, sans plus d'information, l'agent rationnel interprète le clic comme une demande de recherche de restaurant dans la zone désignée par le clic. Dans un autre contexte, par exemple si le système de dialogue intelligent vient de demander à l'utilisateur où il se trouve, cette liste peut être réduite à un acte de type dit "INFORM" indiquant que l'utilisateur se trouve près de l'objet" Tour Eiffel" identifié. Puisque la pile de gestion de clôture de la phase de fusion indique déjà qu'un autre événement est attendu, la fonction d'interprétation de la modalité tactile ne la modifie pas.

La modalité vocale de l'interface utilisateur envoie ensuite à l'agent rationnel l'événement entrant "je cherche un restaurant italien par ici" de type "résultat de reconnaissance vocale". Puisque ce type d'événement apparaît dans la pile de gestion de clôture de la phase de fusion, la couche de gestion des entrées / sorties le retire (la pile se retrouve donc vide) et appelle la fonction d'interprétation de la modalité vocale avec les arguments suivants :
- l'événement entrant "je cherche un restaurant italien par ici";
- une liste d'objets déjà évoqués contenant l'objet "Tour Eiffel";
- et la liste d'actes communicatifs formels retournés par le dernier appel à la fonction d'interprétation de la modalité tactile, par exemple un acte de type "QUERY-REF" ou "INFORM".

La fonction d'interprétation de la modalité vocale identifie alors une question relative à un objet de type restaurant relié à un objet "italien" de type "spécialité" et à un objet (inconnu) de type "localisation". En examinant la liste des objets déjà évoqués, il identifie l'objet inconnu de type "localisation" qu'il a identifié à l'objet "Tour Eiffel" de type "localisation" donné dans la liste. Après avoir créé les nouveaux objets et modifié les objets déjà évoqués dans la structure adéquate de l'historique des interactions, la fonction d'interprétation de la modalité vocale retourne une liste ordonnée d'objets constituée d'un objet "Tour Eiffel" de type "localisation", d'un objet (inconnu) de type "restaurant" et d'un objet "italien" de type "spécialité", ainsi qu'une liste d'actes communicatifs formels constituée d'un unique acte par exemple de type "QUERY-REF" portant sur un restaurant situé près de l'objet "Tour Eiffel" et de spécialité "italienne". Cette fonction d'interprétation n'attendant aucun autre événement entrant, elle ne modifie pas la pile de gestion de clôture de la phase de fusion.

Après exécution de cette fonction, la couche de gestion des entrées / sorties examine la pile. Celle-ci étant maintenant vide, elle conclut à la fin de la phase de fusion multimodale et transmet à l'unité rationnelle la liste des actes communicatifs formels interprétés (ici un unique acte de type "QUERY-REF") et retournés par l'appel à la dernière fonction d'interprétation.

Comme le remarquera l'homme du métier, ce procédé aurait tout aussi bien permis de traiter les deux derniers événements entrants (à savoir le clic et le résultat de reconnaissance vocale) s'ils avaient été reçus par l'agent rationnel en ordre inverse. A la première étape, la fonction d'interprétation de la modalité vocale aurait renvoyé une liste d'objets évoqués constitué d'un objet (inconnu) de type "restaurant", d'un objet "italien" de type "spécialité" et d'un objet (inconnu) de type "localisation", ainsi qu'une liste d'actes communicatifs formels constituée du même acte de type "QUERY-REF" que précédemment. Ayant déterminé que la référence "par ici" désignait une autre action de l'utilisateur, cette fonction d'interprétation aurait indiqué dans la pile de gestion de clôture de la phase de fusion qu'un autre événement entrant (de type quelconque) était attendu. Au second événement, la fonction d'interprétation de la modalité tactile aurait identifié l'objet "Tour Eiffel" de type "localisation", qu'elle aurait reconnu, à l'objet (inconnu) de type "localisation" présent dans la liste des objets déjà évoqués. Le résultat final de la phase de fusion aurait donc été le même.

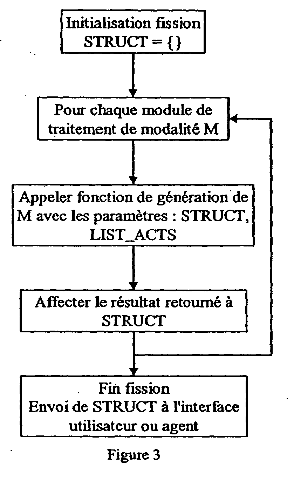

Le mécanisme de fission multimodale mis en oeuvre par la couche de gestion des entrées / sorties sera plus particulièrement décrit ci-après en référence à la figure 3.

Comme indiqué plus haut, le mécanisme de fission multimodale est chargé de construire, à partir des actes communicatifs formels générés par l'unité rationnelle, un flux d'événements sortants à destination des différentes modalités de l'interface utilisateur ou de l'agent logiciel externe, interlocuteur de l'agent rationnel. Cette construction se base sur une structure arborescente dont chaque branche représente de façon homogène l'un des événements sortants générés.

Pour des raisons de commodité, il est judicieux de choisir une structure à balises de type XML, dans laquelle chaque balise de premier niveau représente les informations à destination d'une modalité, chacune de ces informations pouvant elle-même être structurée en balises de niveau inférieur (avec autant de niveaux de profondeur que nécessaire) spécifiques à la modalité correspondante.

Bien que le choix d'une structure de type XML puisse par certains égards rappeler le recours à des langages de traitement des événements multimodaux tels que le langage EMMA (acronyme de l'anglais "Extensible MultiModal Annotation Markup Language") standardisé par le groupe MMI de l'organisme de normalisation W3C, il faut rappeler que la version actuelle de l'architecture connue permet seulement de représenter des entrées multimodales et souligner que l'invention se distingue principalement par l'organisation en modules séparés pour le traitement des événements liés aux différentes modalités, et, dans sa forme la plus complète, par l'orchestration de leurs fonctions de génération.

Au début de la phase de fission multimodale, la couche de gestion des entrées / sorties initialise une structure STRUCT partielle vide, qui représente lé contenu du flux d'événements sortants construit jusqu'alors au cours de la phase de fission multimodale.

Le principe est alors de transmettre la liste LIST_ACTS des actes communicatifs formels produits par l'unité rationnelle, ainsi que la structure partielle STRUCT en cours, à chaque fonction - ou module - de génération d'événements sortants du module de traitement associé à chaque modalité disponible pour la sortie.

Chacune de ces fonctions ou modules de génération retourne alors une nouvelle structure partielle STRUCT, dans laquelle la description de l'événement sortant destiné à la modalité correspondante est complétée. A la fin de la phase de fission multimodale, lorsque la couche de gestion des entrées / sorties a appelé successivement tous les modules de traitement des modalités de sortie disponibles, la dernière structure partielle retournée représente le flux d'événements sortants complet, qui est effectivement transmis par l'agent rationnel à son interlocuteur (utilisateur ou autre agent logiciel) à travers l'interface de communication.

Tout au long de la construction du flux d'événements sortants sous forme de la structure à balises STRUCT, les fonctions de génération respectivement associées aux différentes modalités de sortie possibles utilisent une balise commune permettant d'identifier un objet référé dans un événement de sortie.

En conséquence, si une fonction de génération doit construire un événement de sortie qui évoque un objet déjà évoqué dans une autre modalité, alors la fonction de génération chronologiquement seconde pourra adapter la forme de génération de cet événement en tenant compte de cette situation. Si par exemple la fonction de génération seconde est liée à une modalité d'expression en langue naturelle, l'objet évoqué pour la seconde fois pourra être simplement être désigné par un pronom plutôt que par une expression complète.

Outre qu'elle présente l'avantage d'une grande simplicité, cette technique de fission offre la possibilité de traiter bon nombre de cas où les expressions transmises à différentes modalités doivent être synchronisées.

En revanche, elle est totalement dépendante de l'ordre dans lequel la couche de gestion des entrées / sorties appelle la fonction de génération de chacune des modalités de sortie. Pour éviter l'apparition éventuelle de cet inconvénient, il convient de permettre à chaque fonction de génération d'appeler elle-même, si besoin, une fonction de génération qui a déjà été précédemment appelée par la couche de gestion des entrées / sorties, et qui a donc laissé une trace dans la structure partielle STRUCT, avec une nouvelle structure partielle qui contienne l'événement généré par la fonction de génération appelante et qui ne contienne plus l'événement préalablement généré par la fonction de génération appelée.

Le mécanisme de fission multimodale ici proposé convient aussi bien à l'utilisation d'un langage formel interne de représentation des actes communicatifs reçus ou générés par l'unité rationnelle, qui associe une force illocutoire (activité de communication non verbale) et un contenu propositionnel à chaque acte, qu'à l'utilisation d'un langage plus riche permettant d'associer en outre des indications modales sur la force illocutoire et/ou le contenu propositionnel, de sorte que l'unité rationnelle puisse explicitement raisonner sur les modalités utilisées dans les observations de l'agent rationnel et sur les modalités à utiliser pour les réactions de l'agent rationnel.

Le type de langage interne précédemment évoqué permet de représenter un acte de type "INFORM" accompli sur une modalité particulière ou un acte de type "INFORM" dont une partie du contenu propositionnel a été exprimée sur une modalité et l'autre partie sur une autre modalité.

Dans l'utilisation d'un tel langage, qui étend le langage ArCoL à la multimodalité, les fonctions de génération de chaque modalité se limitent à ne produire, dans la structure partielle STRUCT, que des événements qui traduisent la partie des actes communicatifs générés par l'unité rationnelle qui est destinée à la modalité correspondant à ces évènements.

### Exemple :

Dans l'exemple précédent de l'application de l'invention à la recherche d'un restaurant, l'utilisateur dispose d'une interface vocale et d'une interface graphique, capable d'afficher des cartes et de les animer, pour recevoir les réponses de l'agent rationnel. Supposons que l'agent rationnel réponde à la question précédente de l'utilisateur en indiquant qu'il n'y a pas de restaurant italien près de la tour Eiffel mais qu'il y a dans une zone avoisinante, cette indication étant par exemple donnée en faisant clignoter cette zone sur la carte affichée par l'interface graphique.

La couche de gestion des entrées / sorties commence par envoyer la liste LIST_ACTS des actes communicatifs formels correspondant à cette réponse (générée par l'unité rationnelle) à la fonction de génération de la modalité graphique. La structure partielle STRUCT représentant le flux d'événements sortants est alors vide.

Le module de génération de la modalité graphique ajoute alors une balise dans la structure STRUCT pour représenter un événement sortant à destination de l'interface graphique de l'utilisateur, par exemple un ordre de faire clignoter la zone avoisinant la Tour Eiffel. Comme indiqué plus haut, ce module mentionne que cet événement est relatif à l'objet "autre lieu identifié" de type "localisation", en créant, par exemple, une structure XML de la forme suivante :

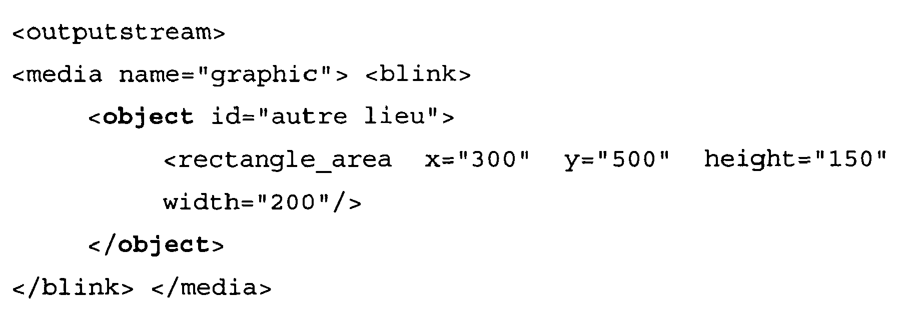

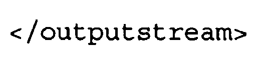

Les mêmes actes communicatifs formels et cette nouvelle structure partielle STRUCT sont alors transmis au module de génération de la modalité vocale. En examinant les événements déjà construits dans la structure partielle en cours, le module de génération de la modalité vocale constate que l'objet "autre lieu identifié" de type "localisation" est déjà évoqué dans une autre modalité, et choisit alors d'utiliser une formulation déictique pour le désigner, par exemple "Il n'y a pas de restaurant italien près de la Tour Eiffel; en revanche, j'en ai trouvé un peu plus loin par ici". La structure résultante renvoyée à la couche de gestion des entrées / sorties aurait alors la forme suivante: 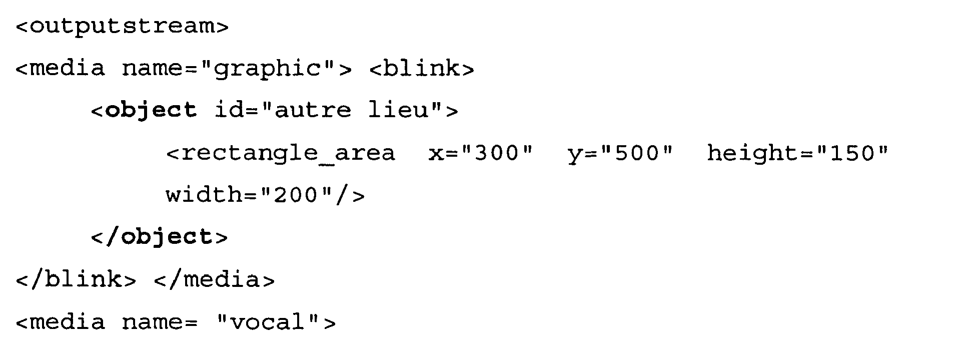 Il n'y a pas de restaurant italien près de la Tour Eiffel; en revanche, j'en ai trouvé <**object** id="autre lieu"> un peu plus loin par ici </**object**>.
</media>
</outputstream>

La couche de gestion des entrées / sorties termine alors la phase de fission multimodale et envoie le flux obtenu à l'interface qui affiche alors chaque message sur le canal approprié. Les affichages invoquant les objets représentés ici par des balises "object" doivent être synchronisés par l'interface utilisateur. Par exemple, le clignotement de la zone avoisinant la Tour Eiffel doit être effectué pendant que la synthèse vocale prononce les mots "un peu plus loin par ici".

## Revendications

1. Agent rationnel dialoguant comprenant une architecture logicielle incluant au moins des moyens d'interprétation d'évènements entrants, une unité rationnelle, et des moyens de génération d'évènements sortants, les moyens d'interprétation étant conçus pour, en fonctionnement, transformer en actes communicatifs formels entrants des événements entrants traduisant une activité de communication d'un agent externe, l'unité rationnelle élaborant, en fonctionnement, des actes communicatifs formels sortants en fonction des actes communicatifs formels entrants et d'un modèle comportemental de l'agent rationnel géré par l'unité rationnelle, et les moyens de génération transformant, en fonctionnement, les actes communicatifs formels sortants en événements sortants matérialisant une activité de communication de l'agent rationnel vis-à-vis de l'agent externe, **caractérisé en ce que** l'architecture logicielle comprend en outre une couche de gestion des entrées et sorties dotée au moins d'un module de fusion multimodale, **en ce que** les moyens d'interprétation comprennent une pluralité de modules d'interprétation d'événements entrants dont chacun est spécifiquement dédié à une modalité de communication qui lui est propre, **en ce que** tous les événements entrants, en fonctionnement, sont pris en charge par le module de fusion multimodale, qui sous-traite aux différents modules d'interprétation l'interprétation de ces événements entrants en fonction de leurs modalités respectives, et **en ce que** le module de fusion multimodale opère une corrélation des actes communicatifs formels entrants recueillis de ces modules d'interprétation au cours d'une même phase de fusion, et soumet à l'unité rationnelle, à la fin de la phase de fusion, les actes communicatifs formels entrants ainsi corrélés.

2. Agent rationnel dialoguant suivant la revendication 1, **caractérisé en ce que** le module de fusion sous-traite l'interprétation des évènements entrants en transmettant au module d'interprétation concerné tout événement entrant exprimé dans la modalité propre à ce module d'interprétation, une liste d'objets éventuellement déjà évoqués dans les évènements entrants antérieurs de la même phase de fusion, et une liste d'actes communicatifs formels retournée par l'appel du précédent module d'interprétation au cours de la même phase de fusion.

3. Agent rationnel dialoguant suivant la revendication 2, **caractérisé en ce que** chaque module d'interprétation appelé par le module de fusion retourne une liste d'objets complétée et mise à jour pour inclure tout nouvel objet évoqué ou modifier tout objet évoqué dans le dernier événement entrant et une liste d'actes communicatifs formels traduisant l'activité de communication représentée par l'ensemble des évènements entrants reçus depuis le début de la même phase de fusion.

4. Agent rationnel dialoguant suivant l'une quelconque des revendications précédentes, **caractérisé en ce que** le module de fusion comprend une pile de gestion de la phase de fusion accessible en lecture et en écriture pour tous les modules d'interprétation et pour le module de fusion.

5. Agent rationnel dialoguant comprenant une architecture logicielle incluant au moins des moyens d'interprétation d'évènements entrants, une unité rationnelle, et des moyens de génération d'évènements sortants, les moyens d'interprétation étant conçus pour, en fonctionnement, transformer en actes communicatifs formels entrants des événements entrants traduisant une activité de communication d'un agent externe, l'unité rationnelle élaborant, en fonctionnement, des actes communicatifs formels sortants en fonction des actes communicatifs formels entrants et d'un modèle comportemental de l'agent rationnel géré par l'unité rationnelle, et les moyens de génération transformant, en fonctionnement, les actes communicatifs formels sortants en événements sortants matérialisant une activité de communication de l'agent rationnel vis-à-vis de l'agent externe, **caractérisé en ce que** la couche de gestion des entrées et sorties est dotée d'un module de fission multimodale, **en ce que** les moyens de génération comprennent une pluralité de modules de génération d'événements sortants dont chacun est spécifiquement dédié à une modalité de communication qui lui est propre, **en ce que** le module de fission multimodale sous-traite aux différents modules de génération la transformation des actes communicatifs formels sortants élaborés par l'unité rationnelle en événements sortants de modalités respectives, et **en ce que** le module de fission multimodale gère le flux de ces événements sortants.

6. Agent rationnel dialoguant suivant la revendication 5 combinée à l'une quelconque des revendications 1 à 4.

7. Agent rationnel dialoguant suivant la revendication 6, **caractérisé en ce que** les modules d'interprétation et de génération multimodales relatifs à une même modalité appartiennent à un même module de traitement de cette modalité.

8. Agent rationnel dialoguant suivant l'une quelconque des revendications 5 à 7, **caractérisé en ce que** le module de fission sous-traite la transformation des actes formels sortants en évènements sortants en adressant séquentiellement aux différents modules de génération les actes communicatifs formels sortants élaborés par l'unité rationnelle et une structure arborescente à compléter, organisée en branches dont chacune est destinée à représenter un des évènements sortants, et **en ce que** chaque module de génération retourne la structure arborescente au module de fission après l'avoir complétée du ou des évènements sortants exprimés dans la modalité propre à ce module de génération.

9. Agent rationnel dialoguant suivant la revendication 8, **caractérisé en ce que** la structure arborescente est une structure à balises, et **en ce que** chacun des modules de génération utilise une balise commune à tous les modules de génération pour identifier un même objet invoqué dans un événement sortant.

10. Agent rationnel dialoguant suivant la revendication 9, **caractérisé en ce que** l'un au moins des modules de génération est conçu pour appeler sélectivement, en vue d'un nouveau traitement, un module de génération précédemment appelé par le module de fission pour lui transmettre une nouvelle structure partielle contenant l'événement sortant élaboré par le module de génération appelant et ne contenant plus l'événement sortant antérieurement élaboré par le module de génération appelé.

11. Système de dialogue intelligent comprenant au moins un agent rationnel dialoguant suivant l'une quelconque des revendications précédentes, associé à une interface de communication multimodale.

12. Procédé de pilotage d'un dialogue intelligent entre un agent rationnel piloté et un agent externe, ce procédé comprenant au moins des opérations d'interprétation consistant à interpréter des évènements entrants fournis à l'agent rationnel piloté en les transformant en actes communicatifs formels entrants, des opérations de détermination consistant à élaborer, sous forme d'actes communicatifs formels sortants, des réponses appropriées aux actes communicatifs formels entrants, et des opérations d'expression consistant à produire, par transformation des actes communicatifs formels sortants, des événements sortants à destination de l'agent externe, **caractérisé en ce qu'**il comprend en outre des opérations d'aiguillage, des opérations de corrélation et des opérations de gestion de phase, **en ce qu'**au moins une opération d'aiguillage consiste à prendre en compte au moins un événement entrant en fonction d'une modalité d'expression de cet événement entrant, **en ce que** les opérations d'interprétation des évènements entrants exprimés dans des modalités respectives différentes sont mises en oeuvre séparément, **en ce qu'**au moins une opération de corrélation consiste à recueillir ensemble, au cours d'une même phase de fusion, des actes communicatifs formels entrants correspondant à des évènements entrants de modalités différentes, en vue du traitement conjoint de ces actes communicatifs formels entrants par une même opération de détermination, et **en ce que** les opérations de gestion de phase consistent au moins à déterminer au moins une phase de fusion.

13. Procédé de pilotage suivant la revendication 12, **caractérisé en ce que** les opérations de gestion de phase comprennent au moins une opération de mise à jour d'une pile ou liste d'objets pour la gestion de la clôture de la phase de fusion consistant à stocker sélectivement dans la pile, lors d'une opération d'interprétation, au moins un nouvel objet indiquant l'apparition prévue d'au moins un nouvel événement avant la fin de la phase de fusion, et à retirer sélectivement de la pile, lors d'une opération d'interprétation, un ou plusieurs objets dans le cas où les évènements attendus correspondants ne sont plus à attendre avant la fin de la phase de fusion.

14. Procédé de pilotage suivant la revendication 13, **caractérisé en ce que** les opérations de gestion de phase comprennent en outre une opération de consultation de la pile, consistant à consulter sélectivement tous les objets de la pile lors d'une opération d'interprétation.

15. Procédé de pilotage suivant la revendication 14, **caractérisé en ce que** les opérations de gestion de phase comprennent en outre une opération de chronométrage consistant à retirer sélectivement de la pile un objet de type délai, à armer un chronomètre pour la durée de ce délai, et à consulter la pile à la fin de l'écoulement de ce délai.

16. Procédé de pilotage suivant la revendication 15, **caractérisé en ce que** les opérations de gestion de phase comprennent en outre une opération de clôture de la phase de fusion, consistant à mettre fin à la phase de fusion, postérieurement aux opérations d'interprétation, lorsque la pile est vide.

17. Procédé de pilotage d'un dialogue intelligent entre un agent rationnel piloté et un agent externe, ce procédé comprenant au moins des opérations d'interprétation consistant à interpréter des évènements entrants fournis à l'agent rationnel piloté en les transformant en actes communicatifs formels entrants, des opérations de détermination consistant à élaborer, sous forme d'actes communicatifs formels sortants, des réponses appropriées aux actes communicatifs formels entrants, et des opérations d'expression consistant à produire, par transformation des actes communicatifs formels sortants, des événements sortants à destination de l'agent externe, **caractérisé en ce qu'**il comprend en outre une opération d'enchaînement consistant au moins à appliquer aux actes communicatifs formels sortants, de façon séquentielle, des opérations d'expression respectivement associées à des modalités de sortie différentes, et à produire une structure arborescente organisée en branches dont chacune représente un des évènements sortants, chaque opération d'expression complétant cette structure arborescente avec des informations modales propres à cette opération d'expression.

18. Procédé de pilotage suivant la revendication 17, **caractérisé en ce que** l'opération d'enchaînement produit une structure arborescente à balises et **en ce que** certaines au moins des opérations d'expression associées à des modalités de sortie respectives différentes utilisent une balise commune pour évoquer un même objet invoqué dans un évènement sortant.

19. Procédé de pilotage suivant l'une quelconque des revendications 17 et 18, **caractérisé en ce que** chaque opération d'expression est conçue pour faire elle-même appel à une autre opération d'expression déjà appelée au cours d'une même opération d'enchaînement et pour faire modifier, par cette autre opération d'expression, dans la structure arborescente en cours de construction, un évènement sortant déjà préalablement élaboré par cette autre opération d'expression.

20. Programme d'ordinateur comportant des instructions de programme propres à mettre en oeuvre le procédé suivant l'une quelconque des revendications 12 à 19 lorsque ce programme est installé sur un équipement informatique auquel il est destiné.
